# EUROPÄISCHE PATENTSCHRIFT

(11) **EP 1 398 190 B1**
(45) Veröffentlichungstag und Bekanntmachung des Hinweises auf die Patenterteilung: **29.06.2011**
(21) Anmeldenummer: 03019089.6
(22) Anmeldetag: 22.08.2003
(51) Int. Cl.: B60J 1/20

(54) **Sonnenschutz-Rollo-Anordnung für Kraftfahrzeugfenster**
Roller device for a sun blind for a motor vehicle window
Dispositif pare-soleil à store enrouleur pour une fenêtre d'automobile

(30) Priorität: 11.09.2002 DE 10242060
(43) Veröffentlichungstag der Anmeldung: 17.03.2004
(73) Patentinhaber: Webasto AG, 82131 Stockdorf (DE)
(72) Erfinder: de Waal, Martin, 1566 TS Assendelft (NL)
(74) Vertreter: Epping - Hermann - Fischer

(56) Entgegenhaltungen:
- EP-A- 0 091 278
- AU-B- 562 959
- CH-A- 455 231
- DE-A- 19 910 949
- FR-A- 2 678 868
- FR-A- 2 753 743

## Beschreibung

Die Erfindung betrifft eine Sonnenschutz-Rollo-Anordnung für Kraftfahrzeugfenster mit zumindest einer im eingefahrenen Zustand auf einer Welle aufgewickelten und am Ausziehende ein Ausziehelement aufweisenden Rollobahn, deren Seitenränder im ausgefahrenen Zustand der Rollobahn entlang seitlicher Führungsschienen eines Rollo-Führungsrahmens angeordnet sind, gemäß dem Oberbegriff des Patentanspruches 1.

Derartige Sonnenschutz-Rollo-Anordnungen sind aus der DE 199 10 949 A1 bekannt. Diese bekannte Sonnenschutz-Rollo-Anordnung umfasst mindestens eine Rollobahn, deren Seitenränder sich im ausgefahrenen Zustand der Rollobahn entlang seitlicher Führungsschienen eines Rollo-Führungsrahmens angeordnet sind, wobei die seitlichen Führungsschienen dazu dienen, jeweils ein Antriebsorgan, welches an einem am Ausziehende angeordneten Ausziehspriegels seitlich angreift, aufzunehmen. Die Antriebsorgane sind als druckfest geführte Kabel ausgebildet und verändern die Position der seitlichen Enden des Ausziehspriegels innerhalb der Führungsschienen, die als Fahrzeug-Verkleidungsteil bzw. - Holm ausgebildet sind.

Die zwischen dem Ausziehspriegel und der Welle erstreckenden Seitenränder der Rollobahn sind außerhalb der Führungsschienen angeordnet, so dass ein schlitzartiger Zwischenbereich zwischen den Seitenrändern der Rollobahn und den Führungsschienen besteht. Derartige schlitzartige Zwischenbereiche haben zur Folge, dass zum einen das Sonnenlicht weiterhin durch diese Zwischenbereiche in den Fahrzeuginnenraum eindringen kann und zum anderen Flatterbewegungen der Rollobahn auftreten können, wenn die Rollobahn mit Zugluft, die beispielsweise durch ein geöffnetes Seitenfenster oder ein geöffnetes Schiebedach, vor dem die Sonnenschutz-Rollo-Anordnung angeordnet sein kann, entsteht, in Verbindung kommt. Die dadurch entstehenden Flattergeräusche der Rollobahn sind ebenso wie das weiterhin einfallende Sonnenlicht unerwünscht.

Aus der EP 0 091 278 A1 ist eine Fensterabdeckanordnung bekannt, umfassend ein Rollo und seitliche Schienen. Die Schienen haben Schlitze zur Aufnahme von seitlichen Kantenabschnitten des Rollos. In den Schlitzen sind Führungen angeordnet zum seitlichen Halten des Rollos. Das Rollo weist an jedem seitlichen Kantenabschnitt einen durchgehenden Kanal auf. Die Führungen sind Stifte, die sich von dem unteren Ende des Schlitzes frei nach unten in dem Schlitz erstrecken und eine solche Länge aufweisen, dass ihre oberen Enden in Eingriff mit den Kanälen bleiben, auch wenn das Rollo vollständig aufgerollt ist.

Die FR 2 753 743 A1 offenbart ein Rollo mit einer Rollobahn, die aufwickelbar ist. Die seitlichen Ränder der Rollobahn sind von einem Profilelement gehalten. In dem Profilelement ist eine zu einer Seite offene Kammer angeordnet, die einen Durchgang der Rollobahn ermöglicht. Die seitlichen Ränder der Rollobahn haben die Form einer Tasche, die einen festen Führungsstab umschließen, der in der Kammer des Profilelements angeordnet ist und sich über dessen Länge erstreckt.

Die CH 455 231 offenbart eine Führung für senkrecht fallende, aufrollbare Stores, mit seitlichen Führungsschienen. In mindestens einer der einen Schlitz aufweisenden Führungsschienen ist ein Führungsstab angeordnet, um den eine an mindestens einer der seitlichen Kanten des Stores gebildete Schlaufe herumgeführt ist.

Die AU 562959 offenbart eine flexible Rolloanordnung zur Montage an einer Gebäudeöffnung wie einem Fenster, mit einem flexiblen Rollo, das zwischen einer ersten Position, in der das Rollo die Öffnung freigibt, und einer zweiten Position, in der das Rollo die Öffnung bedeckt, bewegbar ist. Es sind Führungsmittel zur Führung des Rollos zwischen der ersten und der zweiten Position vorgesehen. Die Führungsmittel umfassen einen Stab. Mindestens eine Kante des Rollos weist eine offene Tasche oder eine Naht auf, die ausgebildet ist zum Eingriff mit dem Stab, um so die Tasche oder Kante des Rollos während der Bewegung zu führen.

Die FR 2 678 868 A1 offenbart eine Abdeckvorrichtung mit einem Vorhang, der mittels einer Wickelvorrichtung aufwickelbar ist. Die Abdeckvorrichtung umfasst Mittel zur vertikalen Führung von seitlichen Rändern des Vorhangs. Die Führungsmittel weisen Stifte auf, die mit in den seitlichen Rändern des Vorhangs ausgebildeten Schlaufen zusammenwirken.

Aus der DE 196 50 768 A1 ist eine Sicherheitsnetz-Anordnung mit vereinfachter Bedienung zur Anordnung eines Sicherheitsnetzes zwischen einem Koffer- oder Gepäckraum und dem Fahrgastraum bekannt, das ein- und ausfahrbar ist und dessen seitliche Kanten mit Bändern eingefasst sind. Die Bänder bewirken zwar eine begrenzte Stabilisierung der seitlichen Kanten des Trennnetzes im ausgefahrenen Zustand, jedoch ist eine derartige Stabilisierung der Kanten aufgrund der Flexibilität der Bänder, die für das Aufwickeln des Trennnetzes auf eine Welle erforderlich ist, stark begrenzt.

Demzufolge liegt der vorliegenden Erfindung die Aufgabe zugrunde, eine Sonnenschutz-Rollo-Anordnung für Kraftfahrzeugfenster zur Verfügung zu stellen, die bei ausgefahrener Rollobahn einen zuverlässigen Sonnenschutz und hohe Stabilität gegen Flatterbewegungen aufweist und im eingefahrenen Zustand eine platzsparende Anordnung der Rollobahn ermöglicht.

Diese Aufgabe wird gemäß den Merkmalen des Patentanspruches 1 gelöst.

Ein wesentlicher Punkt der Erfindung liegt darin, dass bei einer Sonnenschutz-Rollo-Anordnung für Kraftfahrzeugfenster mit zumindest einer im eingefahrenen Zustand auf einer Welle aufgewickelten Rollobahn jeder Seitenrand der Rollobahn taschenartig einen in einer seitlichen Führungsschiene eines RolloFührungsrahmens angeordneten Führungsstab umgreift und entlang des Verlaufs des Führungsstabs gleitend bewegbar ist. Auf diese Weise wird die Rollobahn in einer senkrecht zur Ausfahrrichtung der Rollobahn verlaufenden Richtung von den zwei parallel zu den Seitenrändern angeordneten Führungsstäben gespannt und von den Führungsschienen umfasst, so dass kein schlitzartiger Zwischenbereich zwischen den Seitenrändern der Rollobahn und den Führungsschienen vorhanden ist. Somit ist der Einfall von Sonnenlicht in den seitlichen Bereichen der Rollobahn im ausgefahrenen Zustand nicht mehr möglich. Eine Flatterbewegung der ausgefahrenen Rollobahn wird durch die Arretierung der Führungsstäbe ebenso vermieden. Das der Welle zugewandte Ende des Führungsstabs ist als freies Ende ausgebildet, so dass ein Aufstülpen der taschenartigen Seitenränder zu Beginn des Übergangs von dem eingefahrenen in den ausgefahrenen Zustand der Rollobahn über das freie Führungsstabende möglich ist. Auf diese Weise kann die Rollobahn im eingefahrenen Zustand aufgrund ihrer Flexibilität auf der Welle aufgewickelt werden, während sich die Führungsstäbe nicht mehr in den taschenartigen Seitenrändern befinden.

Gemäß einer bevorzugten Ausführungsform ist der Führungsstab in einer Bohrung der seitlichen Führungsschiene derart angeordnet, dass ein Zwischenraum zwischen einer Außenwand der Bohrung und einer Außenwand des Führungsstabs zur Aufnahme des taschenartig geformten Seitenrands ausgebildet ist. Ein derartiger rohrförmiger Zwischenraum ist derart bemessen, dass darin die Rollobahn mit ihrer Materialstärke gleitend aufgenommen werden kann, ohne dass ein Verklemmen oder das Aufwerfen von Falten der Rollobahn im Bereich ihrer taschenartigen Seitenränder möglich ist. Auf diese Weise ist eine gleitende Bewegung der Rollobahn in Längsrichtung bei gleichzeitiger Arretierung in Querrichtung mittels einer einfachen Konstruktion möglich.

Die Bohrungen innerhalb der Führungsschienen sind mit parallel dazu angeordneten schlitzartigen Öffnungen, die zur Rollobahnmitte hinweisen, verbunden, so dass Abschnitte der Rollobahn, die mit den taschenartigen Seitenrändern in Verbindung stehen, aufgenommen werden können.

Vorteilhaft sind die taschenartigen Seitenränder mittels einer sich entlang des Seitenrandverlaufs erstreckenden Naht jeweils derart ausgebildet, dass ein eingeklapptes Seitenrandende mit der restlichen Rollbahn zur Bildung einer Tasche verbunden ist. Alternativ zu einer Nahtverbindung ist jede weitere Verbindungsart denkbar, beispielsweise eine Verbindung mittels Nieten oder Klammern oder ein lösbare Verbindung.

Gemäß einer bevorzugten Ausführungsform ist jeder Führungsstab mit seinem der Welle abgewandten Ende an dem Führungsrahmen befestigt. Auf diese Weise wird die Rollobahn im ausgefahrenen Zustand in ihrer Querrichtung durch die Führungsstäbe arretiert.

Vorteilhaft weist die Sonnenschutz-Rollo-Anordnung zwei nebeneinander angeordnete Rollobahnen auf, deren taschenartigen Seitenränder jeweils einen Führungsstab umfassen. Somit ist das Abdecken eines Fahrzeugfensters mittels einer der beiden Rollobahnen möglich, wohingegen die weitere Hälfte des abzudeckenden Kraftfahrzeugfensters ohne Sonnenschutz sein kann. Wenn zwei derartig nebeneinander angeordnete Rollobahnen beispielsweise im Bereich eines Schiebedachs angeordnet sind, können die Fahrzeuginsassen individuell für sich bestimmen, ob sie einen Sonnenschutz wünschen oder nicht.

Jede Rollobahn kann mittels einer Antriebsvorrichtung ein- und ausfahrbar sein oder alternativ von Hand betätigt werden.

Um einen wirksamen Schutz gegen das einfallende Sonnenlicht im Bereich der Windschutzscheibe zu erhalten, kann jede fahrzeuginnenseitig im oberen Bereich der Windschutzscheibe angeordneten Rollobahn nur bis zu einer vorgegebenen Grenze ausgefahren werden, wie es durch den Gebrauch von bisher verwendeten umklappbaren Sonnenblenden bekannt ist

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in perspektivischer Ansicht einen Ausschnitt einer Sonnenschutz-Rollo-Anordnung gemäß einer Ausführungsform der Erfindung im teilweise ausgefahrenen Zustand;
- Fig. 2: eine Querschnittsansicht entlang des in Figur 1 gezeigten Schnitts A - - A des Ausschnitts der Sonnenschutz-Rollo-Anordnung gemäß der Ausführungsform der Erfindung, und
- Fig. 3: eine Vorderansicht des Ausschnitts der Sonnenschutz-Rollo-Anordnung gemäß der Ausführungsform der Erfindung im nahezu eingefahrenen Zustand.

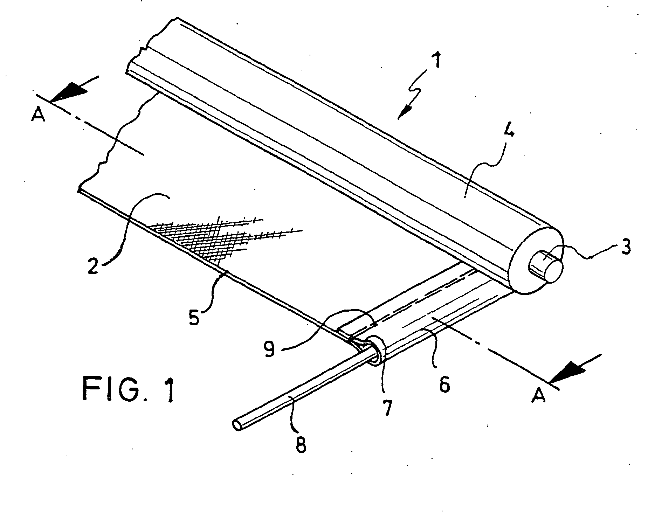

Figur 1 zeigt in einer perspektivischen Ansicht einen rechtsseitigen Ausschnitt der Sonnenschutz-Rollo-Anordnung gemäß einer Ausführungsform der Erfindung im teilweise ausgefahrenen Zustand. Die Sonnenschutz-Rollo-Anordnung 1 umfaßt eine Rollobahn 2, die teilweise auf einer Welle 3 zur Bildung einer zylinderartigen Rollobahn-Rolle 4 aufgewickelt ist.

Ein Ausziehende 5 weist ein hier nicht gezeigtes Ausziehelement auf, an dem gezogen werden kann, um die Rollobahn 2 von der Rollobahn-Rolle 4 gegen die Rückhaltekraft einer hier nicht gezeigten Feder abzuwickeln.

Ein Seitenrand 6 ist derart ausgebildet, dass ein eingeklapptes Seitenrandende eine sich entlang des Verlaufs des Seitenrandes erstreckende Tasche 7 bildet. In der Tasche 7 ist ein Führungsstab 8, der ortsfest in einer hier nicht gezeigten seitlichen Führungsschiene eines Rollo-Fahrzeugrahmens angeordnet ist, vorhanden. Der Führungsstab 8 weist vorzugsweise einen kreisförmigen Querschnitt auf und erstreckt sich über die gesamte Länge des Seitenrands 6 bei einer ausgefahrenen Rollobahn, nämlich von dem Bereich der an einem Dachöffnungsrand angeordneten Welle 3 bis zu einem gegenüberliegenden Dachöffnungsrand.

Das eingeklappte Seitenrandende ist zur Bildung der Tasche 7 mit der Rollobahn 2 mittels einer längs dem Seitenrand 6 verlaufenden Naht 9, die als durchgesteppte Naht ausgebildet sein kann, verbunden.

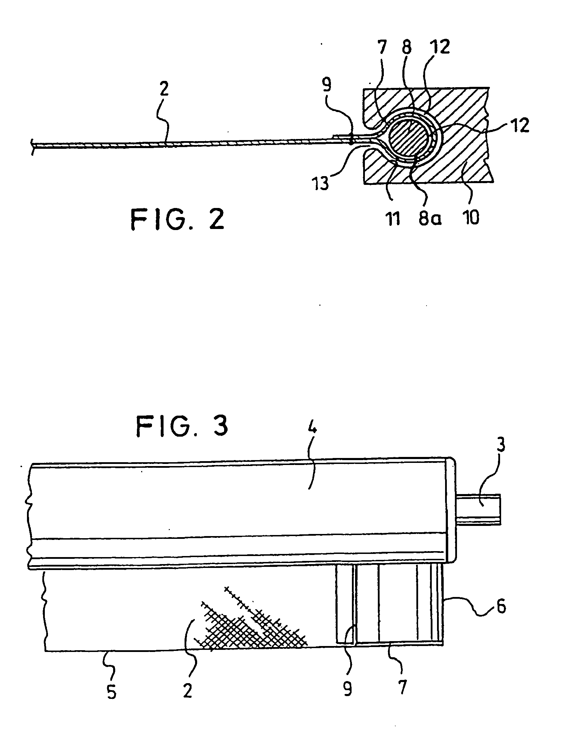

Figur 2 zeigt in einer Querschnittsansicht entlang des Schnitts A - - A, wie er in Figur 1 gezeigt wird, die Sonnenschutz-Rollo-Anordnung 1 im teilweise ausgefahrenen Zustand. Der Figur 2 ist deutlich zu entnehmen, dass die Rollobahn 2 die Tasche 7 an ihrem Seitenrand 6 durch das umgeklappte Seitenrandende, welches mittels einer Naht 9 mit der Rollobahn verbunden ist, bildet.

Die Tasche 7 umgreift den Führungsstab 8, der innerhalb einer Bohrung mit einem Außenrand 11 angeordnet ist, die innerhalb der zu dem Rollo-Führungsrahmen zugehörigen Führungsschiene 10 angeordnet ist.

Zwischen einem Außenrand 8a des Führungsstabs 8 und der längs dazu verlaufenden Außenwand 11 der Bohrung ist eine Zwischenraum 12 vorhanden, dessen Abmaße in Querschnittsrichtung derart bemessen sind, dass der die Tasche 7 bildende Seitenrand 6 in Abhängigkeit von der Materialstärke der Rollobahn ohne Verklemmungen, Reibungen und Bildung von Falten entlang des Längsverlaufs des Führungsstabs gleitend bewegt werden kann.

Die Bohrung ist mit einer innerhalb der Führungsschiene 10 angeordneten schlitzartigen Öffnung 13 verbunden, die zur Rollobahnmitte hin angeordnet ist und zur Aufnahme desjenigen Anteils der Rollobahn dient, der den Seitenrand 6 mit der restlichen Rollobahn verbindet. insbesondere kann in diesem Bereich die Naht 9 angeordnet sein, so dass diese für den betrachtenden Fahrzeuginsassen nicht sichtbar ist.

Figur 3 zeigt einen Ausschnitt der Sonnenschutz-Rollo-Anordnung 1 gemäß der Ausführungsform der Erfindung im nahezu eingefahrenen Zustand im Bereich der Welle 3. Im nahezu eingefahrenen Zustand ist die Rollobahn 2 fast vollständig auf der Rollobahn-Rolle 4 aufgewickelt. Ein hier nicht gezeigtes zu der Welle 3 hingewandtes Ende des Führungsstabs 8 ist von der Welle 3 derart beabstandet, dass der taschenartige Seitenrand im eingefahrenen Zustand der Rollobahn den Führungsstab nicht umfasst und zu Beginn des Übergangs in den ausgefahrenen Zustand über das der Welle zugewandte Ende stülpbar ist. Auf diese Weise kann der Seitenrand 6, der ebenso wie die Rollobahn aus einem flexiblen, zumeist stoffartigen Material besteht, auf die Welle 3 zur Bildung der Rollobahn-Rolle 4 zylinderartig aufgewickelt werden, ohne dass der Führungsstab 8, der vorzugsweise aus einem unflexiblen Material besteht, dies behindert.

Das der Welle 3 abgewandte hier nicht gezeigte Ende des Führungsstabs 8 ist an der Führungsschiene 10 befestigt, um den Führungsstab 8 ortsfest in der Führungsschiene 10 und dem Fahrzeug anzuordnen.

An dieser Stelle sei darauf hingewiesen, dass alle oben beschriebenen Teile für sich allein gesehen und in jeder Kombination, insbesondere die in der Zeichnung dargestellten Details als erfindungswesentlich beansprucht werden. Abänderungen hiervon sind dem Fachmann geläufig. Beispielswiese kann der Führungsstab 8 nicht nur als geradlinig verlaufender Stab ausgebildet sein, sondern in seinem Verlauf auch Kurven aufweisen, die dazu dienen können, die Rollobahn im ausgefahrenen Zustand an den kurvenartigen Verlauf der abzudeckenden Windschutzscheibe, Heckscheibe, des Seitenfensters oder Schiebedachfensters anzupassen.

### Bezugszeichenliste

- 1: Sonnenschutz-Rollo-Anordnung
- 2: Rollobahn
- 3: Welle
- 4: Rollobahn-Rolle
- 5: Ausziehende
- 6: Seitenrand
- 7: Tasche
- 8: Führungsstab
- 8a: Außenwand des Führungsstabs 8
- 9: Naht
- 10: Führungsschiene
- 11: Außenwand der Bohrung
- 12: Zwischenraum zwischen Außenwand 11 der Bohrung und Außenwand 8a des Führungsstabs 8
- 13: schlitzartige Öffnung in der Führungsschiene 10

## Patentansprüche

1. Sonnenschutz-Rollo-Anordnung (1) für Kraftfahrzeugfenster mit zumindest einer im eingefahrenen Zustand auf einer Welle (3) aufgewickelten und an einem Ausziehende (5) ein Ausziehelement aufweisenden Rollobahn (2), deren Seitenränder (6) im ausgefahrenen Zustand der Rollobahn (2) entlang seitlicher Führungsschienen (10) eines Rolloführungsrahmens angeordnet sind, wobei
jeder Seitenrand (6) taschenartig einen in jeweils einer der seitlichen Führungsschienen (10) angeordneten Führungsstab (8) umgreift und entlang des Verlaufs des Führungsstabs (8) gleitend bewegbar ist,
**dadurch gekennzeichnet, daß**
das der Welle (3) zugewandte Ende jedes Führungsstabs (8) zu der Welle (3) derart beabstandet angeordnet ist, daß die taschenartig geformten Seitenränder (6) im eingefahrenen Zustand der Rollobahn (2) die Führungsstäbe (8) nicht umgreifen und zu Beginn des Übergangs in den ausgefahrenen Zustand über das der Welle (3) zugewandte Ende stülpbar sind.

2. Sonnenschutz-Rollo-Anordnung (1) nach Anspruch 1,
**dadurch gekennzeichnet, daß**
der Führungsstab (8) in einer Bohrung der seitlichen Führungsschiene (10) derart angeordnet ist, daß ein Zwischenraum (12) zwischen einer Außenwand (11) der Bohrung und einer Außenwand (8a) des Führungsstabs (8) zur Aufnahme des taschenartig geformten Seitenrands (6) ausgebildet ist.

3. Sonnenschutz-Rollo-Anordnung (1) nach Anspruch 2,
**dadurch gekennzeichnet, daß**
die Bohrung mit einer in der seitlichen Führungsschiene (10) angeordneten schlitzartigen Öffnung (13) zur Aufnahme eines mit dem taschenartig geformten Seitenrand (6) verbundenen Anteils der Rollobahn (6) verbunden ist, deren Verlauf sich entlang dem Bohrungsverlauf erstreckt.

4. Sonnenschutz-Rollo-Anordnung (1) nach einem der vorangegangenen Ansprüche,
**dadurch gekennzeichnet, daß**
der taschenartig geformte Seitenrand (6) eine sich entlang des Seitenrandverlaufs erstreckende Naht (9) umfasst, die ein eingeklapptes Seitenrandende mit der restlichen Rollobahn (2) zur Bildung einer Tasche (7) verbindet.

5. Sonnenschutz-Rollo-Anordnung (1) nach einem der vorangegangenen Ansprüche,
**dadurch gekennzeichnet, daß**
der Führungsstab (8) mit seinem der Welle (3) abgewandten Ende an dem Führungsrahmen befestigt ist.

6. Sonnenschutz-Rollo-Anordnung (1) nach einem der vorangegangenen Ansprüche,
**dadurch gekennzeichnet, daß**
sie zwei nebeneinander angeordnete Rollobahnen umfaßt, deren taschenartige Seitenränder jeweils einen Führungsstab umfassen.

7. Sonnenschutz-Rollo-Anordnung (1) nach einem der vorangegangenen Ansprüche,
**dadurch gekennzeichnet, daß**
jede Rollobahn (2) mittels einer Antriebsvorrichtung ein- und ausfahrbar ist.

8. Sonnenschutz-Rollo-Anordnung (1) nach einem der vorangegangenen Ansprüche,
**dadurch gekennzeichnet, daß**
jede Rollobahn (2) bis zu einer vorgegebenen Grenze ausfahrbar ist.

## Claims

1. Roller device for a sun blind (1) for motor vehicle windows, with at least one roller blind web (2) which, in the retracted state, is wound up on a shaft (3), has a pull-out element at a pull-out end (5) and the side edges (6) of which, in the extended state of the roller blind web (2), are arranged along lateral guide rails (10) of a roller blind guide frame, wherein each side edge (6) engages in the manner of a pocket around a guide bar (8) arranged in each case in one of the lateral guide rails (10) and is movable in a sliding manner along the profile of the guide bar (8), **characterized in that that** end of each guide bar (8) which faces the shaft (3) is arranged at a distance from the shaft (3) such that the side edges (6), which are shaped in the manner of pockets, do not engage around the guide bars (8) in the retracted state of the roller blind web (2) and, at the beginning of the transition into the extended state, can be pulled over the end facing the shaft (3).

2. Roller device for a sun blind (1) according to Claim 1, **characterized in that** the guide bar (8) is arranged in a hole in the lateral guide rail (10) in such a manner that an intermediate space (12) is formed between an outer wall (11) of the hole and an outer wall (8a) of the guide bar (8) for receiving the side edge (6) which is shaped in the manner of a pocket.

3. Roller device for a sun blind (1) according to Claim 2, **characterized in that** the hole is connected to a slot-like opening (13) which is arranged in the lateral guide rail (10) and is intended for receiving a portion of the roller blind web (2), which portion is connected to the side edge (6) which is shaped in the manner of a pocket, the profile of said roller blind web extending along the profile of the hole.

4. Roller device for a sun blind (1) according to one of the preceding claims, **characterized in that** the side edge (6) which is shaped in the manner of a pocket comprises a seam (9) which extends along the side edge profile and connects a folded-in side edge end to the remaining roller blind web (2) to form a pocket (7).

5. Roller device for a sun blind (1) according to one of the preceding claims, **characterized in that** that end of the guide bar (8) which faces away from the shaft (3) is fastened to the guide frame.

6. Roller device for a sun blind (1) according to one of the preceding claims, **characterized in that** said device comprises two roller blind webs which are arranged next to each other and the pocket-like side edges of which each surround a guide bar.

7. Roller device for a sun blind (1) according to one of the preceding claims, **characterized in that** each roller blind web (2) can be retracted and extended by means of a driving device.

8. Roller device for a sun blind (1) according to one of the preceding claims, **characterized in that** each roller blind web (2) can be extended to a predetermined limit.

## Revendications

1. Dispositif pare-soleil à store enrouleur (1) pour une fenêtre de véhicule automobile, comprenant au moins une bande de store (2) enroulée sur un arbre (3) dans l'état rentré et présentant un élément de traction à une extrémité de traction (5), dont les bords latéraux (6), dans l'état sorti de la bande de store (2) sont disposés le long de rails de guidage latéraux (10) d'un cadre de guidage de store,
chaque bord latéral (6) venant en prise à la manière d'une poche autour d'une barre de guidage (8) disposée à chaque fois dans l'un des rails de guidage latéraux (10) et pouvant être déplacé par glissement le long de l'étendue de la barre de guidage (8),
**caractérisé en ce que**
l'extrémité de chaque barre de guidage (8) tournée vers l'arbre (3) est disposée de manière espacée par rapport à l'arbre (3) de telle sorte que les bords latéraux (6) formés à la manière d'une poche ne viennent pas en prise autour des barres de guidage (8) dans l'état rentré de la bande de store (2) et puissent être retournés pardessus l'extrémité tournée vers l'arbre (3) au début de la transition dans l'état sorti.

2. Dispositif pare-soleil à store enrouleur (1) selon la revendication 1,
**caractérisé en ce que**
la barre de guidage (8) est disposée dans un alésage du rail de guidage latéral (10) de telle sorte qu'un espace intermédiaire (12) soit réalisé entre une paroi extérieure (11) de l'alésage et une paroi extérieure (8a) de la barre de guidage (8) pour recevoir le bord latéral (6) formé à la manière d'une poche.

3. Dispositif pare-soleil à store enrouleur (1) selon la revendication 2,
**caractérisé en ce que**
l'alésage est connecté à une ouverture (13) de type fente disposée dans le rail de guidage latéral (10) pour recevoir une partie de la bande de store (2) connectée au bord latéral (6) formé à la manière d'une poche, dont l'étendue s'étend le long de l'étendue de l'alésage.

4. Dispositif pare-soleil à store enrouleur (1) selon l'une quelconque des revendications précédentes,
**caractérisé en ce que**
le bord latéral (6) formé à la manière d'une poche comprend un cordon (9) s'étendant le long de l'étendue du bord latéral, qui relie une extrémité du bord latéral rabattue au reste de la bande de store (2) pour former une poche (7).

5. Dispositif pare-soleil à store enrouleur (1) selon l'une quelconque des revendications précédentes,
**caractérisé en ce que**
la barre de guidage (8) est fixée avec son extrémité opposée à l'arbre (3) au cadre de guidage.

6. Dispositif pare-soleil à store enrouleur (1) selon l'une quelconque des revendications précédentes,
**caractérisé en ce**
**qu'**il comprend deux bandes de store adjacentes dont les bords latéraux en forme de poche comprennent à chaque fois une barre de guidage.

7. Dispositif pare-soleil à store enrouleur (1) selon l'une quelconque des revendications précédentes,
**caractérisé en ce**
**que** chaque bande de store (2) peut être rentrée et sortie au moyen d'un dispositif d'entraînement.

8. Dispositif pare-soleil à store enrouleur (1) selon l'une quelconque des revendications précédentes,
**caractérisé en ce**
**que** chaque bande de store (2) peut être sortie jusqu'à une limite prédéfinie.
